# EUROPEAN PATENT APPLICATION

(11) **EP 4 542 949 A1**
(43) Date of publication of application: **23.04.2025**
(21) Application number: 24206814.6
(22) Date of filing: 16.10.2024
(51) Int. Cl.: H04L 41/0833, H04L 41/0893, H04L 41/5041, H04L 41/5054, H04L 41/0894, H04L 41/40, H04L 41/5051, H04W 48/18

(54) **ENERGY EFFICIENT HOMING AND PLACEMENT OF CLOUDIFIED NETWORK FUNCTIONS**

(30) Priority: 17.10.2023 US 202363591049 P
(71) Applicant: Nokia Solutions and Networks Oy, 02610 Espoo (FI)
(72) Inventor: ARORA, Shantanu, Flower Mound (US); NGUYENPHU, Thinh, Roanoke (US); AHVAR, Ehsan, Noisy Le Grand (FR)
(74) Representative: Nokia EPO representatives

(57) **Abstract**

Systems, methods, apparatuses, and computer program products for energy efficient homing and placement of cloudified network functions. A method may include defining features of a policy in an open-cloud domain. The method may also include defining a policy and a policy criteria associated with the features of the policy. The method may further include mapping the policy to at least one operating mode of an open-cloud resource. In addition, the method may include classifying the open-cloud resources in a cluster template. Further, the method may include transmitting the features, the policy, the policy criteria, and the mapping of the policy to a service management and orchestrator or an open-cloud.

## Description

### FIELD:

Some example embodiments may generally relate to mobile or wireless telecommunication systems, such as Long Term Evolution (LTE) or fifth generation (5G) new radio (NR) access technology, or 5G beyond, or sixth generation (6G) access technology, or other communications systems. For example, certain example embodiments may relate to apparatuses, systems, and/or methods for energy efficient homing and placement of cloudified network functions (NFs).

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology and/or sixth generation (6G) radio access technology. Fifth generation (5G) and sixth generation (6G) wireless systems refer to the next generation (NG) of radio systems and network architecture. 5G and 6G network technology is mostly based on new radio (NR) technology, but the 5G/6G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Some example embodiments may be directed to a method. The method may include defining features of a policy in an open-cloud domain. The method may also include defining a policy and a policy criteria associated with the features of the policy. The method may further include mapping the policy to at least one operating mode of an open-cloud resource. In addition, the method may include classifying the open-cloud resources in a cluster template. Further, the method may include transmitting the features, the policy, the policy criteria, and the mapping of the policy to a service management and orchestrator or an open-cloud.

Other example embodiments may be directed to an apparatus. The apparatus may include at least one processor and at least one memory storing instructions. The instructions, when executed by the at least one processor, causes the apparatus at least to define features of a policy in an open-cloud domain. The apparatus may also be caused to define a policy and a policy criteria associated with the features of the policy. The apparatus may further be caused to map the policy to at least one operating mode of an open-cloud resource. In addition, the apparatus may be caused to classify the open-cloud resources in a cluster template. Further, the apparatus may be caused to transmit the features, the policy, the policy criteria, and the mapping of the policy to a service management and orchestrator or an open-cloud.

Other example embodiments may be directed to an apparatus. The apparatus may include means for defining features of a policy in an open-cloud domain. The apparatus may also include means for defining a policy and a policy criteria associated with the features of the policy. The apparatus may further include means for mapping the policy to at least one operating mode of an open-cloud resource. In addition, the apparatus may include means for classifying the open-cloud resources in a cluster template. Further, the apparatus may include means for transmitting the features, the policy, the policy criteria, and the mapping of the policy to a service management and orchestrator or an open-cloud.

In accordance with other example embodiments, a non-transitory computer readable medium may be encoded with instructions that may, when executed in hardware, perform a method. The method may include defining features of a policy in an open-cloud domain. The method may also include defining a policy and a policy criteria associated with the features of the policy. The method may further include mapping the policy to at least one operating mode of an open-cloud resource. In addition, the method may include classifying the open-cloud resources in a cluster template. Further, the method may include transmitting the features, the policy, the policy criteria, and the mapping of the policy to a service management and orchestrator or an open-cloud.

Other example embodiments may be directed to a computer program product that performs a method. The method may include defining features of a policy in an open-cloud domain. The method may also include defining a policy and a policy criteria associated with the features of the policy. The method may further include mapping the policy to at least one operating mode of an open-cloud resource. In addition, the method may include classifying the open-cloud resources in a cluster template. Further, the method may include transmitting the features, the policy, the policy criteria, and the mapping of the policy to a service management and orchestrator or an open-cloud.

Other example embodiments may be directed to an apparatus that may include circuitry configured to define features of a policy in an open-cloud domain. The apparatus may also include circuitry configured to define a policy and a policy criteria associated with the features of the policy. The apparatus may further include circuitry configured to map the policy to at least one operating mode of an open-cloud resource. In addition, the apparatus may include circuitry configured to classify the open-cloud resources in a cluster template. Further, the apparatus may include circuitry configured to transmit the features, the policy, the policy criteria, and the mapping of the policy to a service management and orchestrator or an open-cloud.

Some example embodiments may be directed to a method. The method may include receiving, at a service management and orchestrator or an open-cloud, energy saving attributes comprising features, a policy, policy criteria, and a mapping of the policy. The method may also include performing a homing decision and placing a network function deployment on an open-cloud node cluster based on the energy saving attributes.

Other example embodiments may be directed to an apparatus. The apparatus may include at least one processor and at least one memory storing instructions. The instructions, when executed by the at least one processor, causes the apparatus at least to receive, at a service management and orchestrator or an open-cloud, energy saving attributes comprising features, a policy, policy criteria, and a mapping of the policy. The apparatus may also be caused to perform a homing decision and placing a network function deployment on an open-cloud node cluster based on the energy saving attributes.

Other example embodiments may be directed to an apparatus. The apparatus may include means for receiving, at a service management and orchestrator or an open-cloud, energy saving attributes comprising features, a policy, policy criteria, and a mapping of the policy. The apparatus may also include means for performing a homing decision and placing a network function deployment on an open-cloud node cluster based on the energy saving attributes.

In accordance with other example embodiments, a non-transitory computer readable medium may be encoded with instructions that may, when executed in hardware, perform a method. The method may include receiving, at a service management and orchestrator or an open-cloud, energy saving attributes comprising features, a policy, policy criteria, and a mapping of the policy. The method may also include performing a homing decision and placing a network function deployment on an open-cloud node cluster based on the energy saving attributes.

Other example embodiments may be directed to a computer program product that performs a method. The method may include receiving, at a service management and orchestrator or an open-cloud, energy saving attributes comprising features, a policy, policy criteria, and a mapping of the policy. The method may also include performing a homing decision and placing a network function deployment on an open-cloud node cluster based on the energy saving attributes.

Other example embodiments may be directed to an apparatus that may include circuitry configured to receive, at a service management and orchestrator or an open-cloud, energy saving attributes comprising features, a policy, policy criteria, and a mapping of the policy. The apparatus may also include circuitry configured to perform a homing decision and placing a network function deployment on an open-cloud node cluster based on the energy saving attributes.

### BRIEF DESCRIPTION OF THE DRAWINGS:

For proper understanding of example embodiments, reference should be made to the accompanying drawings, wherein:
FIG. 1 illustrates an example of service management and orchestration (SMO) and Open-Cloud (O-Cloud) relationship and responsibilities, according to certain example embodiments.
FIG. 2 illustrates an example energy saving problem and solution summary, according to certain example embodiments.
FIG. 3 illustrates an example table of a high-level policies with features and criteria, according to certain example embodiments.
FIG. 4 illustrates an example of policies of defined policy criteria, according to certain example embodiments.
FIG. 5 illustrates a clustering example, according to certain example embodiments.
FIG. 6 illustrates an example mode realization output based on the clustering example, according to certain example embodiments.
FIG. 7 illustrates an example of energy saving attributes in a cluster temple, according to certain example embodiments.
FIG. 8(a) illustrates an example the cluster provisioning, according to certain example embodiments.
FIG. 8(b) illustrates an example of another cluster provisioning, according to certain example embodiments.
FIG. 9 illustrates an example deployment descriptor and artifacts with ES support, according to certain example embodiments.
FIG. 10 illustrates an example of an input of data types to a cluster template, according to certain example embodiments.
FIG. 11 illustrates an example cluster template for the cluster provision illustrated in FIG. 8(a), according to certain example embodiments.
FIG. 12 illustrates an example cluster template for the cluster provision illustrated in FIG. 8(b), according to certain example embodiments.
FIG. 13 illustrates an example O-Cloud cluster configuration for the cluster provision illustrated in FIG. 8(a), according to certain example embodiments.
FIG. 14 illustrates an example flow diagram of a method, according to certain example embodiments.
FIG. 15 illustrates an example flow diagram of another method, according to certain example embodiments.
FIG. 16 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for energy efficient homing and placement of cloudified network functions (NFs).

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Open-radio access network (O-RAN) provides various energy saving examples and potential solutions for carrier and cells with off/on as well as radio frequency (RF) channel switch off/on. These examples focus on the network side by proposing solutions to reduce energy consumption. Another area of energy saving is within the Open-Cloud (O-Cloud) where cloudified NFs are deployed. For instance, the O-Cloud may be a cloud computing platform that includes a collection of physical infrastructure nodes that meet O-RAN requirements to host relevant O-RAN functions (e.g., near real time RAN intelligent controller (near-RT RIC), O-RAN central unit control plane (O-CU-CP), O-RAN central unit user plane (O-CU-UP), and O-RAN distributed unit (O-DU)), the supporting software components (e.g., operating system, virtual machine monitor, container runtime, etc.), and the appropriate management orchestration functions. Additionally, the cloudified NFs may correspond to a RAN NF software that is deployable in the O-Cloud via one or more NF deployments, and the NF deployment may correspond to a software deployment on O-Cloud resources that realizes, all or part of, a cloudified NF. A resource is defined in a O-cloud infrastructure as one that may be provisioned and managed through an abstraction. An O-Cloud infrastructure may have multiple types of resources including, for example, physical and logical resources. A physical resource is defined as a kind of resource that has a manifestation in the real world. A logical resource is defined as a kind of resource that uses a number of physical resources, or a portion of physical resources, or a number of software entities. A resource can be assigned to an orchestrator that will deploy workloads for resource consumption.

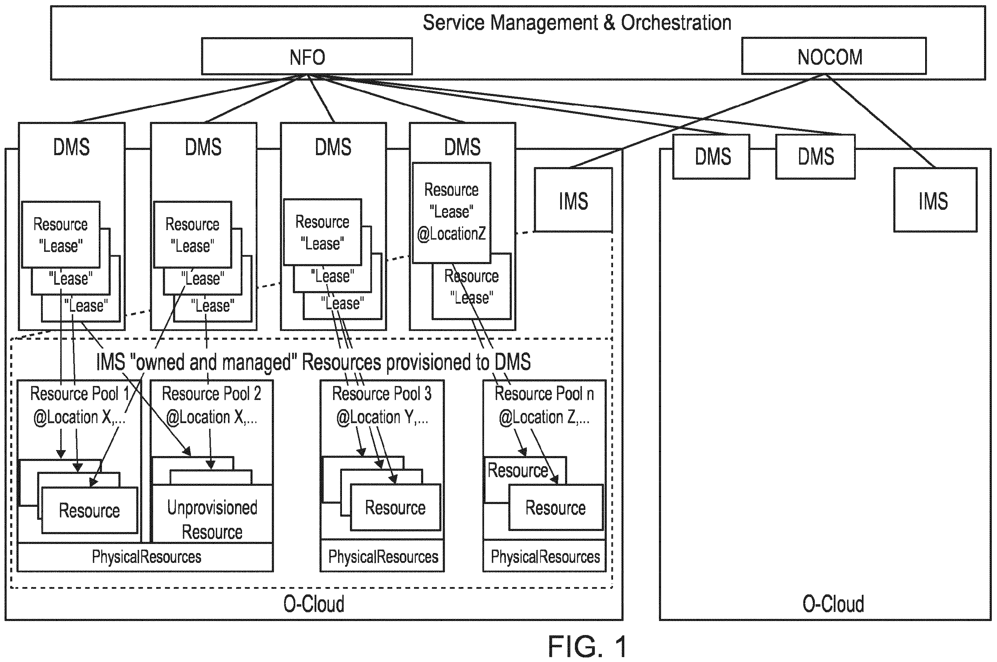

Since data centers may consume about 9% of the energy consumption in a mobile network, it may be beneficial to make efficient decisions for homing and placement of cloudified NFs to reduce O-Cloud energy consumption. In this regard, FIG. 1 illustrates an example of service management and orchestration (SMO) and O-Cloud (i.e., O-Cloud infrastructure management services (IMS) and O-Cloud deployment management services (DMS)) relationship and responsibilities for homing and placement of cloudified NFs, according to certain example embodiments. In certain example embodiments, the DMS may refer to the logical services provided by the O-Cloud for managing the lifecycle of deployments that use cloud resources, and the SMO may refer to a component that oversees handling of all orchestration, management, and automation procedures to monitor and control RAN components. Additionally, the IMS may include logical services provided by the O-Cloud which provides an interface to orchestrate the O-Cloud lifecycle processes with the NFs it may be hosting and other operational procedures.

As illustrated in FIG. 1, the SMO may be responsible to make the homing decision, which may result in the SMO selecting an appropriate O-Cloud node cluster matching requested capabilities for a specific NF deployment. The SMO may also determine the specific DMS that the SMO deems adequate for the NF deployment. Furthermore, the O-Cloud may include multiple DMS(s). In some example embodiments, there may be a single IMS for O-Cloud that manages all resources of DMSs as well as resources that are not allocated to any DMS in the O-Cloud. The O-Cloud DMS(s) may be responsible to decide on the placement of the workloads for an NF deployment. This decision may be internally inside the O-Cloud node cluster(s) based on the SMO's homing decision, and using other NF deployment requirements that the SMO receives through an O2dms. The O2 interfaces may refer to the interfaces associated with a collection of O-Cloud services that are provided by the O-Cloud platform to the SMO.

The O-Cloud node clusters may be made up of a collection of O-Cloud nodes that work in concert with each other, through a set of interconnecting O-Cloud node cluster networks. The O-Cloud node may also include a network connected (physical and/or logical) computer or a network connection terminating function. The O-Cloud node may be provisioned by the IMS into the O-Cloud node cluster, and the O-Cloud node may be an O2ims exposed abstracted resource based on the cloud infrastructure internal compute node. The O-Cloud node may also be a basic computation resource designator that is used to execute workloads, and may be through of as a leased physical or logical server connected to the O-Cloud network. O-Cloud nodes may be provisioned (e.g., leased) from the O-Cloud resource pools with assigned operating system and cluster software, into managed O-Cloud node clusters.

As discussed herein, certain example embodiments may provide a collaborative solution to make the homing and placement of cloudified NF decisions more efficient with respect to O-Cloud energy consumption. To achieve such solution, certain example embodiments may identify various parts that may play an impactful role on energy efficiency of homing and placement decisions for cloudified NFs. For instance, some of these parts may include energy saving policy translation, energy saving based resource classification (e.g., node group), and/or NF deployment lifecycle management (e.g., homing). According to certain example embodiments, the O-Cloud node group may include a set of O-Cloud nodes within an O-Cloud node cluster that may be treated as equal by some aspects such as, for example, an O-Cloud node cluster scheduler. These O-Cloud nodes may be interconnected through the set of O-Cloud node cluster networks and an optional set of O-Cloud node group networks. The O-Cloud nodes may commonly have similar capabilities and characteristics exposed from their set of used computational, storage, and networking resources. Additionally, the node clusters may be deployed local to one cloud site or distributed over multiple cloud sites; however, they may usually be within one O-Cloud. Further, homing may include a process of selecting an appropriate DMS, and there may be a function within SMO to select an appropriate O-Cloud node cluster(s) matching the requested capabilities for the NF deployment(s), and make a determination of the specific DMS that the SMO deems adequate for an NF deployment.

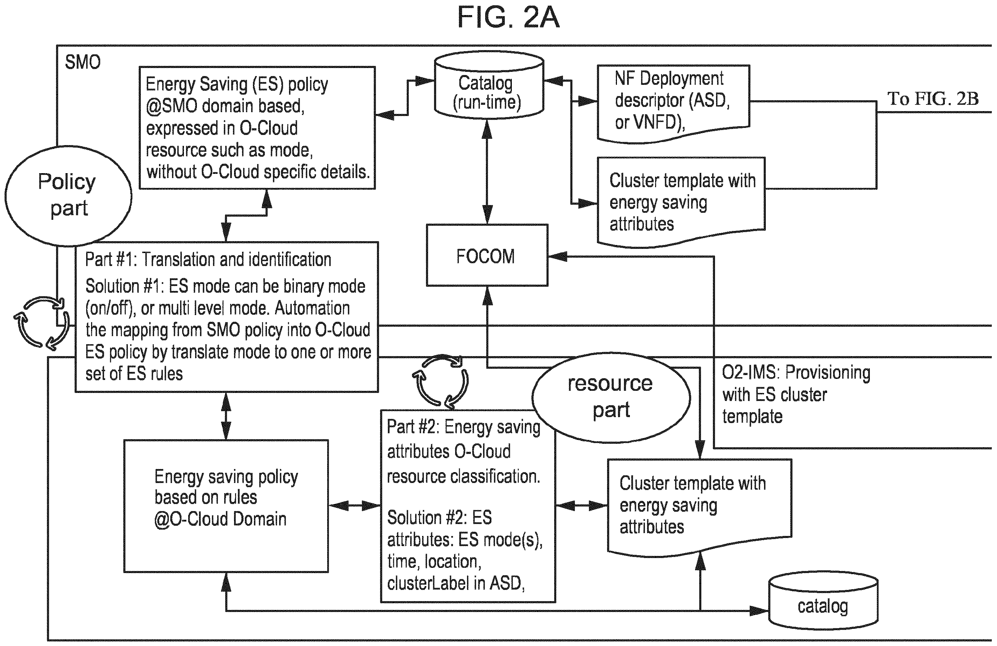

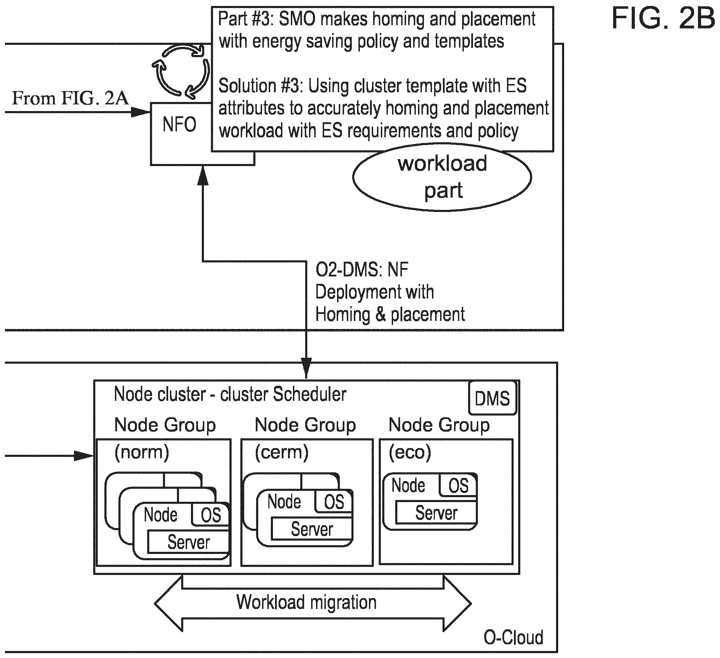

FIG. 2 illustrates an example energy saving problem and solution summary, according to certain example embodiments. As illustrated in FIG. 2, one energy saving problem may pertain to energy saving policies and requirements that may be expressed in different layers at the SMO and O-Cloud. These policies may be generated from different sources, and the policy of each layer may be expressed in different contexts and semantics. Thus, it may be difficult to implement an autonomous and consistent translation of each layer policy and identify where an enforcement function may be applied. Another problem may pertain to classification of O-Cloud resources inside a cluster for energy efficient homing, and placement of a cloudified NF deployment. For instance, for cluster provisioning in O-Cloud, there may be a set of specific requirements given by a containerized network function (CNF) provider to the O-Cloud operator to hose the cloudified NF. A cluster template may be used to specify these requirements for the O-Cloud cluster provisioning. However, there is currently no method to classify O-Cloud resources inside a cluster and detect which O-Cloud node group (NG) inside the cluster is the best candidate in the aspect of energy consumption to host the cloudified NF deployment.

As also illustrated in FIG. 2, another problem may pertain to making a homing decision for a cloudified NF. In this regard, the SMO may select an appropriate DMS in the O-Cloud, and an O-Cloud node cluster matching the requesting capabilities for that cloudified NF deployment. The DMS may be responsible for the placement of the NF deployment. If the requested capabilities of a cloudified NF deployment require energy savings, it may be necessary to efficiently and accurately identify O-Cloud resource capabilities that satisfy cloudified NF deployment resource requirements and energy saving policies.

In view of the various problems described above, certain example embodiments may provide ways to translate the energy saving policy in the O-Cloud and SMO domain into a definitive range (e.g., mode realization) of different levels of energy consumption to classify the O-Cloud resources (e.g., node group) for energy savings. Certain example embodiments may also introduce specific energy saving (ES) attributes into a cluster template such as, for example, an ES cluster label, ES mode(s), time, location, etc. to classify a node group. In further example embodiments, the SMO or a network function orchestration (NFO) may use a cluster label and ES mode(s) attributes to efficiently and accurately make homing and placement decisions. In some example embodiments, the NFO may include logical services of the SMO that coordinate between the O-Cloud for managing deployment lifecycle events, open loop, and closed loop operational procedures.

As an example solution of the problems described above, certain example embodiments may provide energy policy translation and mode realization. For instance, an example solution to energy saving policy translation and mode realization between the O-Cloud and the SMO may be accomplished by defining the features of a low-level policy (e.g., O-Cloud policy pertaining to specific methods and details to implement high-level objectives (SMO policy)) in the O-Cloud domain, defining the mode criteria, and mapping the low-level policy into modes. The methods described herein may, for example, refer to a technique to achieve energy saving features in the O-Cloud. The features may include data labels on which the criteria for the policy can be constructed, and the policy may include a set of rules or criteria to achieve energy savings for an O-Cloud resource using energy saving features. Further, the mode may refer to a consolidated range of different levels of energy consumption achieved by different set(s) of policies applied together.

In the energy policy translation and mode realization, features for polices may be defined. For instance, in certain example embodiments, the features may include a power savings rate corresponding to an amount of power saved by a policy during a certain (e.g., predefined) period of time. In other example embodiments, the features may include a resource availability that defines an availability of the O-Cloud resources (e.g., central processing unit (CPU), memory, hardware (HW), accelerator, etc.) when the policy is applied. In further example embodiments, the features may include a time window during which the policy or modes may be activated, and may include a location of a cloud site that supports virtual RAN functions (e.g., cloudified NF). In other example embodiments, the energy policy translation and mode realization other reasonable features may be added and considered.

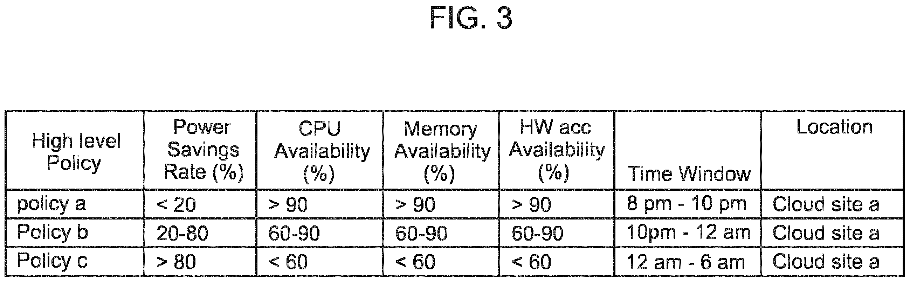

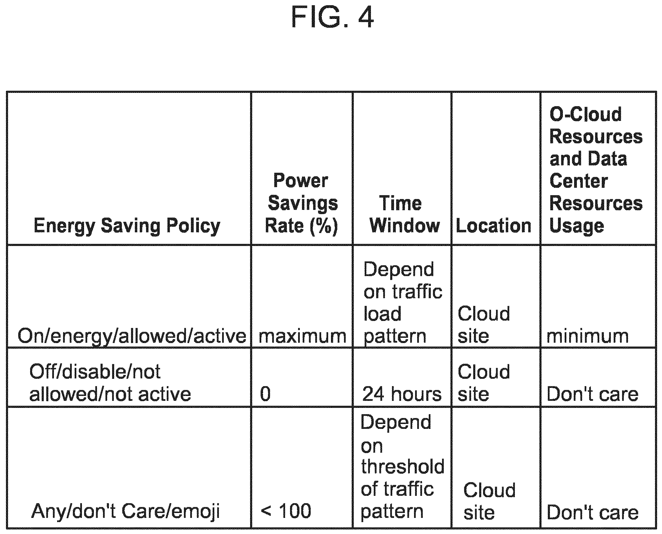

In the energy policy translation and mode realization, polices and policy criteria may also be defined. For instance, a high-level policy may be defined according to the value of certain features based on certain threshold(s) or ranges (e.g., criteria). FIG. 3 illustrates an example table of a high-level policies (e.g., SMO policy pertaining to comprehensive objective(s) that focuses on "what" without detailed implementation specifics with a higher level of abstraction) with features and criteria, according to certain example embodiments. As illustrated in FIG. 3, three polices may be considered, including, for example, policies a, b, and c. However, in other example embodiments, more or less than the three policies illustrated may be applicable. Furthermore, FIG. 3 illustrates example criteria with thresholds/ranges for each of the policies a, b, and c, and each policy is associated with certain features related to O-Cloud resources including, for example, power savings rate (%), CPU availability (%), memory availability (%), hardware accelerator (HW acc) availability (%), time window, and location. Additionally, FIG. 4 illustrates a method on/enable/allowed/active, off/disable/not allowed/not active, and any/don't care/emoji/neutral policies of defined policy criteria, according to certain embodiments. This unique option provides a specific criteria for policy translation between the high and low-level policies. When Energy Saving Policy is set to "on/enable/allowed/active", it translates to low-level policy where the O-Cloud resources are configured to achieve the maximum power saving as possible and using minimum O-Cloud and data center resources as possible, with the time window that it is dependent on the traffic load pattern at specific site. When Energy Saving Policy is set to "off/disable/not allowed/not active", it translates to low-level policy where the O-Cloud resources are configured to achieve the no power saving, and O-Cloud and data center resources energy saving are disabled or turn-off, within anytime during 24-hour time window at specific site. When Energy Saving Policy is set to "Any/don't Care/emoji/neutral", it translates to low-level policy where the O-Cloud resources are configured to O-Cloud policy best effort energy saving capable with the time window that it depends on the traffic load pattern at specific site.

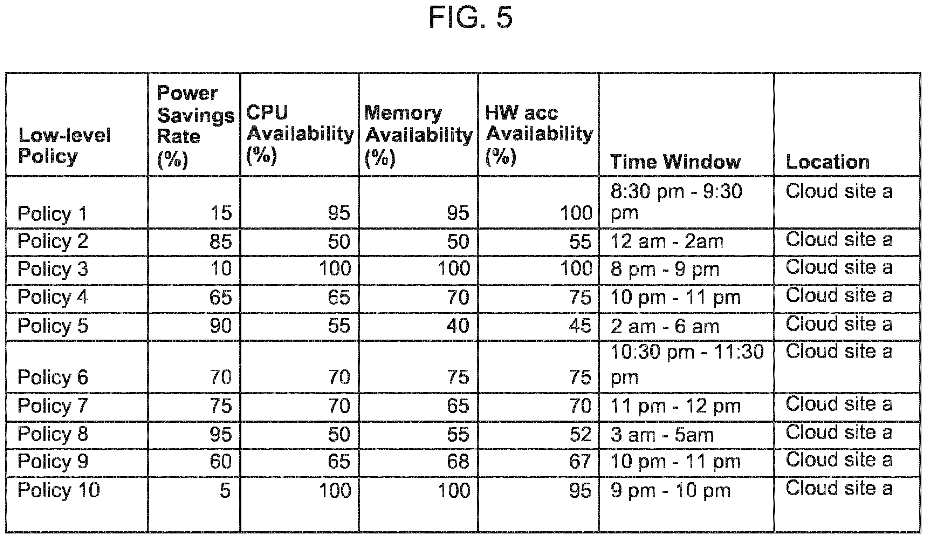

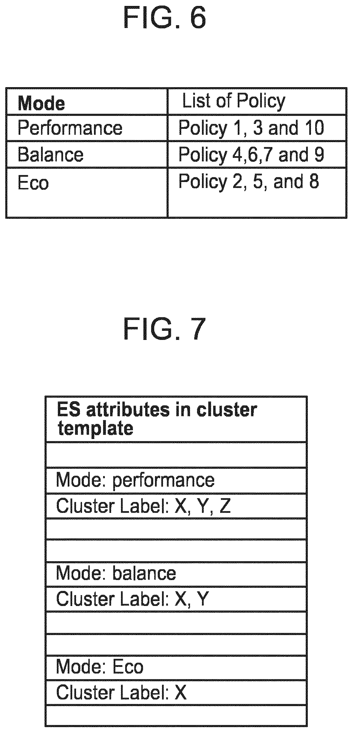

FIG. 5 illustrates a clustering example, according to certain example embodiments, and FIG. 6 illustrates an example mode realization output based on the clustering example, according to certain example embodiments. As illustrated in FIG. 6, the mode realization output may include a performance mode, a balance mode, and an eco mode. A mode may refer to a consolidated range of energy consumption achieved by different sets of policies applied together. Additionally, a mode may correspond to a range energy consumption defined by the Cloud operators or network service providers. An operator may define more or less number of modes with optional names. In the energy policy translation and mode realization, mode realization may be performed. To realize the modes, the low-level policies illustrated in FIG. 5 may be mapped to the high-level energy saving policies illustrated in FIG. 3. For example, the modes may be realized by mapping low-level policies to high-level policies. In some example embodiments, when there is a greater number of low-level policies, the low-level policies may first be grouped (e.g., based on similarities or conditions that are satisfied in the criteria), and then mapped to appropriate high-level policies. By performing this grouping, it may be possible to reduce complexity. For instance, as illustrated in FIGs. 5 and 6, low-level policies 1, 3, and 10 have a power savings rate, a resource availability, and a time window as per a threshold defined for a performance mode. Additionally, policies 4, 6, 7, and 9 may be defined for a balance mode, and policies 2, 5, and 8 may be defined for an eco mode.

As another example solution of the problems described above, certain example embodiments may provide implementation of ES attributes into cluster templates. To classify the O-Cloud resource (e.g., node group) in a cluster template, certain attributes may be defined, including, for example, mode and cluster label. The mode may be derived as described above, and the cluster label may represent an attribute defined in a deployment descriptor of the NF deployment. The deployment descriptor may describe a deployment option that has been validated by a solution provider of the application. The deployment descriptor may include design-time information and data that describe an application, and that is used by the SMO as input for the deployment of the application workload.

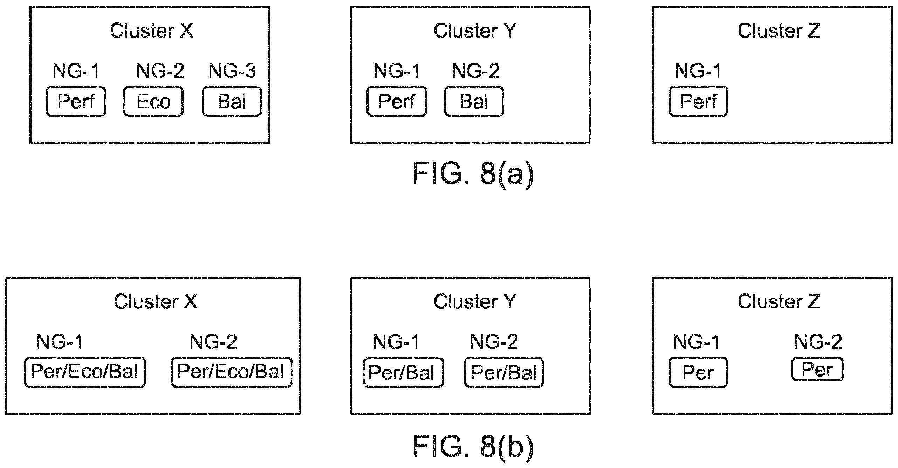

FIG. 7 illustrates an example of ES attributes in a cluster temple, according to certain example embodiments. As illustrated in FIG. 7, according to the cluster template, cluster X supports all three modes. In some example embodiments, there may be various options on how the cluster may be provisioned. For example, FIG. 8(a) illustrates the cluster may be provisioned as part of a static mode NG that may be created in cluster X as NG-1, NG-2, and NG-3 with each of their respective modes assigned to them. Alternatively, FIG. 8(b) illustrates the cluster may be provisioned as part of a dynamic mode NG where the modes of the NG may be changed to Perf/Eco/Bal according to the requirement.

As a further example solution of the problems described above, certain example embodiments may provide cluster label(s) and ES mode(s) attributes for homing. As part of the SMO NF deployment procedure, the SMO may use ES attributes from the example solutions described above, and the cluster template or ES attributes made available to the SMO. For example, the SMO may use such attributes to efficiently perform and accurately place the NF deployment on a specific O-Cloud node cluster that supports a wide range of energy saving capabilities.

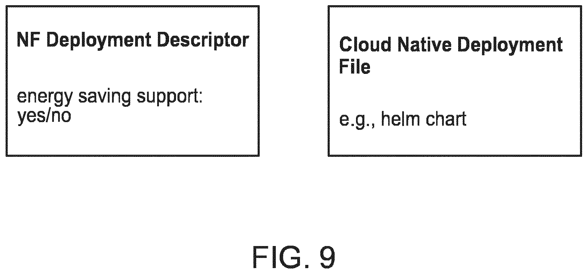

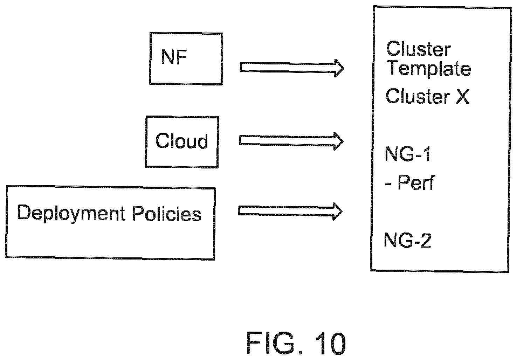

In certain example embodiments, the NF deployment may be deployed on the O-Cloud procedures where the SMO receives an instantiation request. The instantiation request may be received by the SMO from a Network Function Install Project Manager. The Network Function Install Project Manager may correspond to an Operator designing each NF instance. Further, the instantiation request may include either homing requirements about where the NF deployments need to be instantiated (e.g., instantiation request may identify a target O-Cloud node cluster), and/or relative constraints for the instantiation of the NF deployment. However, in other example embodiments the instantiation request may not contain the homing location information (e.g., target O-Cloud). In such cases, the SMO may use the deployment descriptor and NF deployment artifacts to determine on which O-Cloud node cluster to instantiate the NF deployment. For instance, FIG. 9 illustrates an example deployment descriptor and artifacts with ES support, according to certain example embodiments. Additionally, the NF deployment artifacts may be described as a cloud native descriptor and cluster template. In certain example embodiments, the NF Deployment Descriptor may include design-time information and data that describes an application and that is used by the SMO as input for the deployment of the application workload. Additionally, the Cloud Native Deployment File may correspond to an artifact that describes O-Cloud resources. Further, FIG. 10 illustrates an example of an input of data types to a cluster template, according to certain example embodiments. As illustrated in FIG. 10, the input data types can be NF Deployment Descriptor, Cloud Native Descriptor File, and deployment policies.

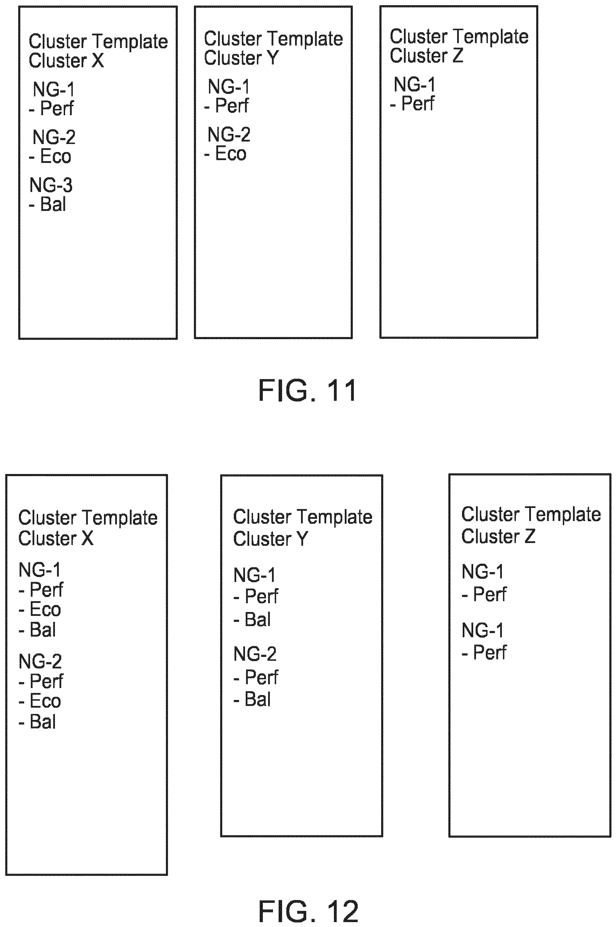

FIG. 11 illustrates an example cluster template for the cluster provision illustrated in FIG. 8(a), according to certain example embodiments, and FIG. 12 illustrates an example cluster template for the cluster provision illustrated in FIG. 8(b), according to certain example embodiments.

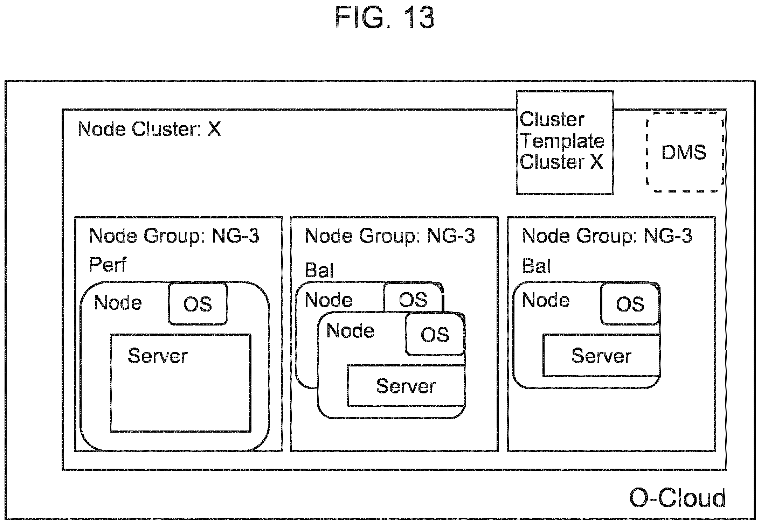

Further, FIG. 13 illustrates an example O-Cloud cluster configuration for the cluster provision illustrated in FIG. 8(a), according to certain example embodiments. As illustrated in FIG. 13, the cluster template or descriptor may include information of the O-Cloud node cluster as a declarative target configuration of a node cluster. The cluster template may include an O-Cloud internal configuration for how the node cluster will be built and configured based on O-Cloud internal resources and software. The cluster template may also include a set of energy saving attributes described above as part of the ES attributes into the cluster template.

In certain example embodiments, the ES attributes may be configured within a node cluster and exposed to the SMO over the O2ims interface (e.g., O2 interface). The O2 interface may be an open logical interface within the O-RAN architecture providing a secured communication between the SMO and O-Cloud. The O2 interface may enable the management of O-Cloud infrastructures and the deployment lifecycle management of O-RAN cloudified NFs that run on O-Cloud. In other words, the O2 interface may provide a platform of resources and workload management. Additionally, the O2 interface may be composed of services provided by the SMO and service provided by the O-Cloud.

According to certain example embodiments, the creation of the cluster template may be achieved through a technical team that has knowledge of the O-Cloud available resources, and application providers (e.g., NF deployment vendor). Additionally, in some example embodiments, the cluster template may pass through validation testing and on-boarded onto the O-Cloud and SMO repositories.

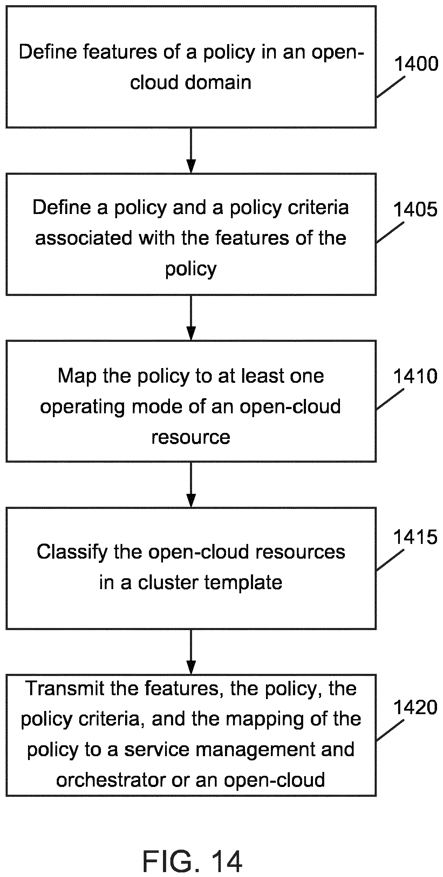

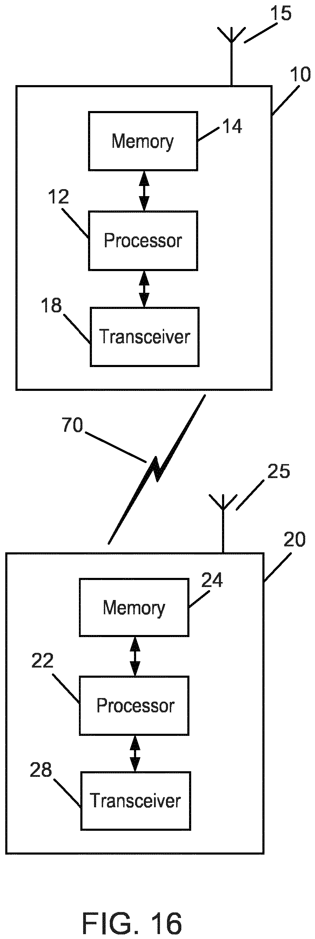

FIG. 14 illustrates an example flow diagram of a method, according to certain example embodiments. In an example embodiment, the method of FIG. 14 may be performed by a network entity, or a group of multiple network elements in a 3GPP system, such as LTE or 5G-NR. For instance, in an example embodiment, the method of FIG. 14 may be performed by an O-Cloud service (e.g., IMS), or a microservice in O-Cloud or SMO similar to one of apparatuses 10 or 20 illustrated in FIG. 16.

As illustrated in FIG. 14, the method may include, at 1400, defining features of a policy in an open-cloud domain. The method may also include, at 1405, defining a policy and a policy criteria associated with the features of the policy. The method may further include, at 1410, mapping the policy to at least one operating mode of an open-cloud resource. In addition, the method may include, at 1415, classifying the open-cloud resources in a cluster template. Further, the method may include, at 1420, transmitting the features, the policy, the policy criteria, and the mapping of the policy to a service management and orchestrator or an open-cloud.

According to certain example embodiments, the features may include a power savings rate of an amount of power saved by the policy during a predetermined period of time, a resource availability or open-cloud resources, a time window during which the policy or the at least one operating mode can be activated, or a location of a cloud site that supports virtual radio access network functions. In other example embodiments, any other reasonable features may be included and considered. According to some example embodiments, the policy and the policy criteria many be defined based on a value, threshold, or range. According to other example embodiments, the policy criteria is defined by at least one of on/off, any/do not care, or emoji and neutral.

In certain example embodiments, the at least one operating mode may be a consolidated range of energy consumption achieved by different policies applied together. In some example embodiments, the at least one operating mode may include performance, balance, or eco. In other example embodiments, the method may further include grouping the policy with additional policies based on similarities or conditions that satisfy the policy criteria. In further example embodiments, classification of the open-cloud resources or cluster nodes is based on at least one of the operating mode, or a cluster label, wherein the cluster label is an attribute defined in a deployment descriptor of a network function deployment. In some example embodiments, the cluster template may identify a group of open-cloud resources or cluster nodes provisioned in a static mode node group or a dynamic mode node group.

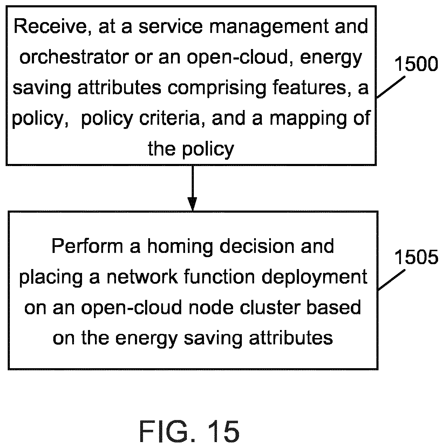

FIG. 15 illustrates an example flow diagram of a method, according to certain example embodiments. In an example embodiment, the method of FIG. 15 may be performed by a network entity, or a group of multiple network elements in a 3GPP system, such as LTE or 5G-NR. For instance, in an example embodiment, the method of FIG. 15 may be performed by a SMO similar to one of apparatuses 10 or 20 illustrated in FIG. 16.

As illustrated in FIG. 15, the method may include, at 1500, receiving, at a service management and orchestrator or an open-cloud, energy saving attributes comprising features, a policy, policy criteria, and a mapping of the policy. The method may also include, at 1505, performing a homing decision and placing a network function deployment on an open-cloud node cluster based on the energy saving attributes.

According to certain example embodiments, a part of the network function deployment may include receiving an instantiation request. According to some example embodiments, the instantiation request may include homing requirements about where the network function deployment needs to be instantiated, or relative constraints for the instantiation of the network function deployment. According to other example embodiments, the method may further include determining on which open-cloud node cluster to instantiate the network function deployment based on a deployment descriptor and a network function deployment artifact. In some example embodiments, the network function deployment artifact may include a cloud native descriptor and a cluster template.

In certain example embodiments, the cluster template or the cloud native descriptor may include information of the open-cloud node cluster as a declarative target configuration for a node cluster. In other example embodiments, the cluster template may include an open-cloud internal configuration for how a node cluster will be built and configured. In further example embodiments, the cluster template may include a set of energy saving attributes. According to certain example embodiments, the energy saving attributes may be configured within a node cluster and exposed to the open-cloud over an O2 interface.

FIG. 16 illustrates a set of apparatuses 10 and 20 according to certain example embodiments. In certain example embodiments, apparatuses 10 and 20 may be elements in a communications network or associated with such a network. For example, apparatus 10 may be an O-Cloud service (e.g., IMS), or a microservice in O-Cloud or SMO, or other similar radio communication computer device, and apparatus 20 may be a SMO, or other similar computing device.

In some example embodiments, apparatuses 10 and 20 may include one or more processors, one or more computer-readable storage medium (for example, memory, storage, or the like), one or more radio access components (for example, a modem, a transceiver, or the like), and/or a user interface. In some example embodiments, apparatuses 10 and 20 may be configured to operate using one or more radio access technologies, such as GSM, LTE, LTE-A, NR, 5G, 6G, WLAN, WiFi, NB-IoT, Bluetooth, NFC, MulteFire, and/or any other radio access technologies. It should be noted that one of ordinary skill in the art would understand that apparatuses 10 and 20 may include components or features not shown in FIG. 16.

As illustrated in the example of FIG. 16, apparatuses 10 and 20 may include or be coupled to a processors 12 and 22 for processing information and executing instructions or operations. Processors 12 and 22 may be any type of general or specific purpose processor. In fact, processors 12 and 22 may include one or more of general-purpose computers, special purpose computers, microprocessors, DSPs, field-programmable gate arrays (FPGAs), application-specific integrated circuits (ASICs), and processors based on a multi-core processor architecture, as examples. While a single processors 12 and 22 is shown in FIG. 16, multiple processors may be utilized according to other example embodiments. For example, it should be understood that, in certain example embodiments, apparatuses 10 and 20 may include two or more processors that may form a multiprocessor system (e.g., in this case processors 12 may represent a multiprocessor) that may support multiprocessing. According to certain example embodiments, the multiprocessor system may be tightly coupled or loosely coupled (e.g., to form a computer cluster).

Processors 12 and 22 may perform functions associated with the operation of apparatuses 10 and 20 including, as some examples, precoding of antenna gain/phase parameters, encoding and decoding of individual bits forming a communication message, formatting of information, and overall control of the apparatuses 10 and 20, including processes and examples illustrated in FIGs. 1-15.

Apparatuses 10 and 20 may further include or be coupled to a memories 14 and 24 (internal or external), which may be respectively coupled to processors 12 and 24 for storing information and instructions that may be executed by processors 12 and 24. Memories 14 and 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memories 14 and 24 can be comprised of any combination of random access memory (RAM), read only memory (ROM), static storage such as a magnetic or optical disk, hard disk drive (HDD), or any other type of non-transitory machine or computer readable media. The instructions stored in memories 14 and 24 may include program instructions or computer program code that, when executed by processors 12 and 22, enable the apparatuses 10 and 20 to perform tasks as described herein.

In certain example embodiments, apparatuses 10 and 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 12 and 22 and/or apparatuses 10 and 20 to perform any of the methods and examples illustrated in FIGs. 1-15.

In some example embodiments, apparatuses 10 and 20 may also include or be coupled to one or more antennas 15 and 25 for receiving a downlink signal and for transmitting via an UL from apparatuses 10 and 20. Apparatuses 10 and 20 may further include a transceivers 18 and 28 configured to transmit and receive information. The transceivers 18 and 28 may also include a radio interface (e.g., a modem) coupled to the antennas 15 and 25. The radio interface may correspond to a plurality of radio access technologies including one or more of GSM, LTE, LTE-A, 5G, NR, 6G, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceivers 18 and 28 may be configured to modulate information on to a carrier waveform for transmission by the antennas 15 and 25 and demodulate information received via the antenna 15 and 25 for further processing by other elements of apparatuses 10 and 20. In other example embodiments, transceivers 18 and 28 may be capable of transmitting and receiving signals or data directly. Additionally or alternatively, in some example embodiments, apparatus 10 may include an input and/or output device (I/O device). In certain example embodiments, apparatuses 10 and 20 may further include a user interface, such as a graphical user interface or touchscreen.

In certain example embodiments, memories 14 and 34 store software modules that provide functionality when executed by processors 12 and 22. The modules may include, for example, an operating system that provides operating system functionality for apparatuses 10 and 20. The memory may also store one or more functional modules, such as an application or program, to provide additional functionality for apparatuses 10 and 20. The components of apparatuses 10 and 20 may be implemented in hardware, or as any suitable combination of hardware and software. According to certain example embodiments, apparatuses 10 and 20 may optionally be configured to communicate each other (in any combination) via a wireless or wired communication links 70 according to any radio access technology, such as NR.

According to certain example embodiments, processors 12 and 22 and memories 14 and 24 may be included in or may form a part of processing circuitry or control circuitry. In addition, in some example embodiments, transceivers 18 and 28 may be included in or may form a part of transceiving circuitry.

For instance, in certain example embodiments, apparatus 10 may be controlled by memory 14 and processor 12 to define features of a policy in an open-cloud domain. Apparatus 10 may also be controlled by memory 14 and processor 12 to define a policy and a policy criteria associated with the features of the policy. Apparatus 10 may further be controlled by memory 14 and processor 12 to map the policy to at least one operating mode of an open-cloud resource. In addition, apparatus 10 may be controlled by memory 14 and processor 12 to classify the open-cloud resources in a cluster template. Further, apparatus 10 may be controlled by memory 14 and processor 12 to transmit the features, the policy, the policy criteria, and the mapping of the policy to a service management and orchestrator or an open-cloud.

In other example embodiments, apparatus 20 may be controlled by memory 24 and processor 22 to receive, at a service management and orchestrator or an open-cloud, energy saving attributes comprising features, a policy, policy criteria, and a mapping of the policy. Apparatus 20 may also be controlled by memory 24 and processor 22 to perform a homing decision and placing a network function deployment on an open-cloud node cluster based on the energy saving attributes.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for defining features of a policy in an open-cloud domain. The apparatus may also include means for defining a policy and a policy criteria associated with the features of the policy. The apparatus may further include means for mapping the policy to at least one operating mode of an open-cloud resource. In addition, the apparatus may include means for classifying the open-cloud resources in a cluster template. Further, the apparatus may include means for transmitting the features, the policy, the policy criteria, and the mapping of the policy to a service management and orchestrator or an open-cloud.

Other example embodiments may be directed to an apparatus that includes means for performing any of the methods described herein including, for example, means for receiving, at a service management and orchestrator or an open-cloud, energy saving attributes comprising features, a policy, policy criteria, and a mapping of the policy. The apparatus may also include means for performing a homing decision and placing a network function deployment on an open-cloud node cluster based on the energy saving attributes.

Certain example embodiments described herein provide several technical improvements, enhancements, and/or advantages with respect to homing and placement of cloudified NFs. For instance, in some example embodiments, it may be possible to provide a collaborative solution to make the homing and placement of cloudified NF decisions more efficient with respect to O-Cloud energy consumption. In other example embodiments, the SMO and homing function may not need to know and understand the detailed O-Cloud CPU resource configuration (e.g., p/c states, etc.) and energy saving capabilities. In further example embodiments, the SMO and homing function may not need to know and understand the energy saving policy of the O-Cloud node cluster. Additionally, in some example embodiments, the NF deployment may be homed to a cluster that supports energy saving based on a certain time of the day. In other example embodiments, the NF deployment may be homed to a wide range of supported clusters with different energy saving mode(s) as described herein with respect to classifying the ES attributes into a cluster template. According to further example embodiments, the ES policy at the SMO level may be written in a more declarative (e.g., output oriented, instead of "how") way

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- BS: Base Station
- CNF: Containerized Network Function
- DL: Downlink
- DMS: O-Cloud Deployment Management Services
- eNB: Enhanced Node B
- E-UTRAN: Evolved UTRAN
- FOCOM: Federated O-Cloud Orchestration & Management
- gNB: 5G or Next Generation NodeB
- IM: Information Model
- IMS: O-Cloud Infrastructure Management Services
- LCM: Life Cycle Management
- LTE: Long Term Evolution
- NF: Network Function
- NFO: Network Function Orchestration
- NFVI: Network Function Virtualization Infrastructure
- NR: New Radio
- O-CU: O-RAN Central Unit
- O-CU-CP: O-CU Control Plane
- O-CU-UP: O-CU User Plane
- O-DU: O-RAN Distributed Unit
- O-RU: O-RAN Radio Unit
- PNF: Physical Network Function
- RAN: Radio Access Network
- SMO: Service Management and Orchestration Framework
- UE: User Equipment
- UL: Uplink
- VIM: Virtual Infrastructure Manager
- VNF: Virtual Network Function

## Claims

1. A method comprising:
defining features of a policy in an open-cloud domain;
defining a policy and a policy criteria associated with the features of the policy;
mapping the policy to at least one operating mode of an open-cloud resource;
classifying the open-cloud resources in a cluster template; and
transmitting the features, the policy, the policy criteria, and the mapping of the policy to a service management and orchestrator or an open-cloud.

2. The method according to claim 1, wherein the features comprise:
a power savings rate of an amount of power saved by the policy during a predetermined period of time,
a resource availability or open-cloud resources,
a time window during which the policy or the at least one operating mode can be activated, or
a location of a cloud site that supports virtual radio access network functions.

3. The method according to any of claims 1 or 2,
wherein the at least one operating mode is a consolidated range of energy consumption achieved by different policies applied together, and
wherein the at least one operating mode comprises performance, balance, or eco.

4. The method according to any of claims 1-3, further comprising:
grouping the policy with additional policies based on similarities or conditions that satisfy the policy criteria.

5. The method according to any of claims 1-4, wherein classification of the open-cloud resources or cluster nodes is based on at least one of the following:
the operating mode, or
a cluster label, wherein the cluster label is an attribute defined in a deployment descriptor of a network function deployment.

6. The method according to any of claims 1-5, wherein the cluster template identifies a group of open-cloud resources or cluster nodes provisioned in a static mode node group or a dynamic mode node group.

7. An apparatus, comprising:
at least one processor; and
at least one memory storing instructions, wherein the instructions, when executed by the at least one processor, cause the apparatus at least to
define features of a policy in an open-cloud domain;
define a policy and a policy criteria associated with the features of the policy;
map the policy to at least one operating mode of an open-cloud resource;
classify the open-cloud resources in a cluster template; and
transmit the features, the policy, the policy criteria, and the mapping of the policy to a service management and orchestrator or an open-cloud.

8. The apparatus according to claim 7, wherein the features comprise:
a power savings rate of an amount of power saved by the policy during a predetermined period of time,
a resource availability or open-cloud resources,
a time window during which the policy or the at least one operating mode can be activated, or
a location of a cloud site that supports virtual radio access network functions.

9. The apparatus according to claims 7 or 8, wherein the policy and the policy criteria are defined based on a value, threshold, or range.

10. The apparatus according to any of claims 7-9, wherein the policy criteria is defined by at least one of the following:
on/off,
any/do not care, or
emoji and neutral.

11. The apparatus according to any of claims 7-10,
wherein the at least one operating mode is a consolidated range of energy consumption achieved by different policies applied together, and
wherein the at least one operating mode comprises performance, balance, or eco.

12. The apparatus according to any of claims 7-11, wherein the instructions, when executed by the at least one processor, further causes the apparatus at least to:
group the policy with additional policies based on similarities or conditions that satisfy the policy criteria.

13. The apparatus according to any of claims 7-12, wherein classification of the open-cloud resources or cluster nodes is based on at least one of the following:
the operating mode, or
a cluster label, wherein the cluster label is an attribute defined in a deployment descriptor of a network function deployment.

14. The apparatus according to any of claims 7-13, wherein the cluster template identifies a group of open-cloud resources or cluster nodes provisioned in a static mode node group or a dynamic mode node group.

15. An apparatus, comprising:
at least one processor; and
at least one memory storing instructions, wherein the instructions, when executed by the at least one processor, cause the apparatus at least to
receive, at a service management and orchestrator or an open-cloud, energy saving attributes comprising features, a policy, policy criteria, and a mapping of the policy; and
perform a homing decision and placing a network function deployment on an open-cloud node cluster based on the energy saving attributes.
